# EUROPÄISCHE PATENTSCHRIFT

(11) **EP 2 110 574 B1**
(45) Veröffentlichungstag und Bekanntmachung des Hinweises auf die Patenterteilung: **19.10.2011**
(21) Anmeldenummer: 09002898.6
(22) Anmeldetag: 28.02.2009
(51) Int. Cl.: F16D 13/68

(54) **Lamellenträgeranordnung mit einem Lamellenträger, Lamellenkupplung mit der Lamellenträgeranordnung und Verfahren zur Herstellung der Lamellenträgeranordnung**
Disc carrier assembly with a disc carrier, multiple disc clutch with the disc carrier assembly and method for producing the disc carrier assembly
Agencement de support de disques doté d'un support de disques, embrayage à disques doté de l'agencement de support de disques et procédé de fabrication de l'agencement de support de disques

(30) Priorität: 17.04.2008 DE 102008019164
(43) Veröffentlichungstag der Anmeldung: 21.10.2009
(73) Patentinhaber: BorgWarner Inc., Auburn Hills, MI 48326 (US)
(72) Erfinder: Gold, Eckart, 68766 Hockenheim (DE); Hertel, Marcus, 76646 Bruchsal (DE)
(74) Vertreter: Leckel, Ulf

(56) Entgegenhaltungen:
- WO-A-2006/093396
- WO-A-2007/095884
- US-A- 4 813 522
- US-A- 5 180 043
- US-A- 6 158 265
- US-A1- 2004 035 667

## Beschreibung

Die vorliegende Erfindung betrifft eine Lamellenträgeranordnung für eine Lamellenkupplung mit einem Lamellenträger, der einen rohrförmigen Abschnitt aufweist. Des Weiteren betrifft die vorliegende Erfindung eine Lamellenkupplung mit einer solchen Lamellenträgeranordnung sowie ein Verfahren zur Herstellung einer solchen Lamellenträgeranordnung bzw. einer solchen Lamellenkupplung.

Aus dem Stand der Technik ist eine Vielzahl von Lamellenkupplungen, insbesondere Doppellamellenkupplungen, bekannt. So beschreibt die US 6,929,107 B2 eine Lamellenkupplung, die als Doppelkupplung ausgebildet ist. Die bekannte Lamellenkupplung umfasst zwei unabhängig voneinander ansteuerbare Lamellenpakete, denen jeweils ein Außenlamellenträger zugeordnet ist. Die bekannten Außenlamellenträger umfassen dabei einen sich in radialer Richtung erstreckenden Stützabschnitt, an den sich ein rohrförmiger Abschnitt anschließt, wobei der rohrförmige Abschnitt sich in axialer Richtung erstreckt. So bilden der Stützabschnitt und der rohrförmige Abschnitt einen im Wesentlichen topfförmigen Außenlamellenträger aus. Der Stützabschnitt ist an seinem radial nach innen weisenden Ende mit einer Nabe drehfest verbunden, die in Drehmitnahmeverbindung mit einer Getriebeeingangswelle steht. Der rohrförmige Abschnitt weist hingegen einen Lamellentragabschnitt zur Aufnahme von Außenlamellen auf. Zu diesem Zweck weist der Lamellentragabschnitt ein Verzahnungsprofil zur drehfesten Aufnahme der Außenlamellen auf, wobei der Lamellentragabschnitt in Umfangsrichtung verteilte, wechselweise angeordnete, radial nach außen hervorstehende Axialstege und radial nach innen hervorstehende Axialstege zur Ausbildung des Verzahnungsprofils aufweist. Eine Mitnehmerscheibe an dem dem Stützabschnitt abgewandten Ende des rohrförmigen Abschnitts ist nicht vorgesehen, so dass die Drehmomentübertragung von der Eingangswelle auf den rohrförmigen Abschnitt des Außenlamellenträgers über das zugehörige Lamellenpaket erfolgt, während die Drehmomentübertragung von dem rohrförmigen Abschnitt des Außenlamellenträgers auf die zugehörige Getriebeeingangswelle über den Stützabschnitt und die Nabe erfolgt.

Die bekannten Lamellenkupplungen haben sich in der Praxis bewährt, weisen jedoch einige Nachteile auf. So kann die Verwendung der beschriebenen Außenlamellenträger zum einen zur funktionellen Beeinträchtigung des zugehörigen Lamellenpakets führen, die sich beispielsweise in drehzahlabhängigen Schwankungen in der Drehmomentübertragung äußern kann. Zum anderen kann es bei dauerhaft hohen Drehzahlen des Außenlamellenträgers zum Bruch desselben kommen, so dass ein Totalversagen der Lamellenkupplung nicht ausgeschlossen werden kann. Dieselben Probleme bestehen in ähnlicher Weise auch bei den Innenlamellenträgern der bekannten Lamellenkupplungen.

Die WO 2006/093396 A1 offenbart ein als Lamellenträger fungierendes Kupplungsgehäuse, das von einem geschlossenen Befestigungsring umgeben ist. Der geschlossene Befestigungsring weist ferner Halteteile auf, die sich in radialer Richtung nach innen durch Aussparungen in der Wand des Kupplungsgehäuses erstrecken. Im Innern des Kupplungsgehäuses ist ein Sprengring angeordnet, an dem die Halteteile des Befestigungsrings in axialer Richtung abgestützt sind, so dass der Befestigungsring zumindest in einer axialen Richtung über den Sprengring formschlüssig an dem Kupplungsgehäuse festgelegt ist. Der Befestigungsring verhindert während des Betriebes ein fliehkraftbedingtes Expandieren der Wände des Kupplungsgehäuses in radialer Richtung nach außen, es besteht jedoch der Nachteil, dass die bekannte Lamellenträgeranordnung einen aufwendigen Aufbau hat, der ein erhöhtes Gewicht, einen größeren Bauraumbedarf und eine aufwendige Montage bedingt.

Es ist daher eine Aufgabe der vorliegenden Erfindung, eine Lamellenträgeranordnung mit einem Lamellenträger zu schaffen, die einerseits unabhängig von der Drehzahl eine gleichmäßige Drehmomentübertragung gewährleistet und ein Brechen des Lamellenträgers aufgrund der starken Fliehkrafteinwirkung bei hohen Drehzahlen sicher verhindert und andererseits einen einfachen Aufbau aufweist, der eine einfache Montage sowie ein geringes Gewicht sicherstellt. Der vorliegenden Erfindung liegt ferner die Aufgabe zugrunde, eine Lamellenkupplung mit einer solchen vorteilhaften Lamellenträgeranordnung zu schaffen. Des Weiteren liegt der Erfindung die Aufgabe zugrunde, ein Verfahren zur Herstellung einer solchen vorteilhaften Lamellenträgeranordnung bzw. Lamellenkupplung anzugeben.

Diese Aufgabe wird durch die in den Patentansprüchen 1, 12 bzw. 13 angegebenen Merkmale gelöst. Vorteilhafte Ausführungsformen der Erfindung sind Gegenstand der Unteransprüche.

Die erfindungsgemäße Lamellenträgeranordnung ist für eine Lamellenkupplung konzipiert und weist zunächst einen Lamellenträger auf, bei dem es sich beispielsweise um einen Außen- oder Innenlamellenträger handeln kann. Der Lamellenträger weist wiederum einen rohrförmigen Abschnitt auf, der vorzugsweise der drehfesten Aufnahme von Lamellen dient. Die Lamellenträgeranordnung weist ferner einen den rohrförmigen Abschnitt umgebenden Stützring auf, der an dem Lamellenträger befestigt ist. Der Stützring ist geschlossen ausgebildet, wobei der rohrförmige Abschnitt des Lamellenträgers in radialer Richtung an dem geschlossenen Stützring abgestützt oder abstützbar ist. Der Stützring ist in axialer Richtung an dem Lamellenträger festgelegt. Hierdurch ist sichergestellt, dass der Stützring nicht in axialer Richtung von dem rohrförmigen Abschnitt bzw. dem Lamellenträger rutschen kann. Außerdem ist hierdurch sichergestellt, dass stets derselbe Bereich des rohrförmigen Abschnitts in radialer Richtung an dem Stützring abgestützt ist, der aufgrund der Fliehkrafteinwirkung am stärksten aufgeweitet würde. Dies schließt nicht aus, dass der Stützring in axialer Richtung spielbehaftet an dem Lamellenträger festgelegt ist, vielmehr ist die Fertigung und Montage einer Lamellenträgeranordnung mit einem Stützring, der in axialer Richtung spielbehaftet an dem Lamellenträger festgelegt ist, vereinfacht. Dabei ist der Stützring form- und/oder kraftschlüssig an dem Lamellenträger befestigt, d. h. es besteht keine stoffschlüssige Verbindung. Hierdurch ist zum einen die Montage wesentlich vereinfacht, während zum anderen ein Festschweißen des Stützrings, das zu einer Beschädigung oder Verschmutzung der anderen Bauteile führt, vermieden werden kann. Erfindungsgemäß sind radial nach außen hervorstehende Anschläge und/oder radial nach innen zurückgesetzte Vertiefungen zur Fixierung des Stützrings in axialer Richtung an dem rohrförmigen Abschnitt vorgesehen. Unter Vertiefungen können auch Aussparungen in dem rohrförmigen Abschnitt verstanden werden. Bei der ersten Alternative kann sich der Stützring in axialer Richtung an den radial nach außen hervorstehenden Anschlägen abstützen. Bei der zweiten Alternative kann der Stützring in den zurückgesetzten Vertiefungen einliegen, so dass der Stützring in axialer Richtung an den entsprechenden Rändern der Vertiefung abgestützt sein kann. Je nach zur Verfügung stehendem Bauraum sollte sich der Konstrukteur für die erste Alternative, die zweite Alternative oder Kombinationen hieraus entscheiden. Um den Herstellungs- bzw. Montageaufwand für die Lamellenträgeranordnung besonders gering zu halten, sind die Anschläge oder Vertiefungen einstückig mit dem rohrförmigen Abschnitt ausgebildet.

Neben den bereits zuvor erwähnten Vorteilen der erfindungsgemäßen Lamellenträgeranordnung bestehen ferner die nachfolgend beschriebenen Vorteile. Dank des geschlossenen Stützrings kann sich der rohrförmige Abschnitt des Lamellenträgers bei hohen Drehzahlen in radialer Richtung an dem geschlossenen Stützring abstützen, so dass eine Aufweitung und somit eine Verformung des rohrförmigen Abschnitts, die auf die Fliehkrafteinwirkung zurückzuführen wäre, sicher unterbunden wird. Auf diese Weise wird ein Bauteilversagen, das auf einen Bruch oder eine Materialermüdung im Bereich des rohrförmigen Abschnitts des Lamellenträgers zurückzuführen ist, sicher verhindert. Auch kann mit Hilfe der erfindungsgemäßen Lamellenträgeranordnung eine gleichmäßige, von der Drehzahl unabhängige Drehmomentübertragung über das zugehörige Lamellenpaket sichergestellt werden, zumal das Übertragungsverhalten des zugehörigen Lamellenpakets durch eine drehzahlabhängige Aufweitung des rohrförmigen Abschnitts des Lamellenträgers beeinflusst würde.

In einer vorteilhaften Ausführungsform der erfindungsgemäßen Lamellenträgeranordnung liegt der Stützring spielbehaftet oder klemmend von außen an dem rohrförmigen Abschnitt des Lamellenträgers an. Bei der ersten Alternative gestaltet sich die Herstellung des Stützrings sowie des rohrförmigen Abschnitts besonders einfach, zumal keine geringen Anschlusstoleranzen am Stützring oder an dem rohrförmigen Abschnitt eingehalten werden müssen. Des Weiteren kann der Stützring einfacher an dem rohrförmigen Abschnitt befestigt werden. Ferner ist bei einer spielbehafteten Anlage des Stützrings an dem rohrförmigen Abschnitt eine Aufweitung des rohrförmigen Abschnitts bis zu einem gewissen Maß möglich, ohne hierdurch die Dauerfestigkeit des rohrförmigen Abschnitts wesentlich einzuschränken. Bei der zweiten Alternative, bei der der Stützring klemmend von außen an dem rohrförmigen Abschnitt anliegt, ist sichergestellt, dass sich der rohrförmige Abschnitt nicht oder nur in geringem Maße aufweitet.

In einer bevorzugten Ausführungsform der erfindungsgemäßen Lamellenträgeranordnung sind die Anschläge oder Vertiefungen durch Prägen oder Stanzen erzeugt. Bei einem geprägten Anschlag bzw. einer geprägten Vertiefung besteht zu allen Seiten des Anschlags bzw. des Bodens der Vertiefung eine stoffschlüssige Verbindung mit dem umgebenden Material des rohrförmigen Abschnitts. Demgegenüber ist bei einem gestanzten Anschlag oder einer gestanzten Vertiefung der stoffschlüssige Zusammenhalt mit dem umgebenden Material des rohrförmigen Abschnitts in zumindest einer Richtung unterbrochen. Je nachdem, welches Herstellungsverfahren für die Lamellenträgeranordnung gewählt wird, sollte sich der Konstrukteur für die erste Alternative, die zweite Alternative oder Kombinationen hieraus entscheiden, wie dies später eingehender erläutert wird.

In einer besonders bevorzugten Ausführungsform der erfindungsgemäßen Lamellenträgeranordnung können die Anschläge in radialer Richtung elastisch verformt werden. Dies hat den Vorteil, dass die Montage des Stützrings an dem rohrförmigen Abschnitt des Lamellenträgers wesentlich vereinfacht ist. So kann der Stützring beispielsweise unter elastischer Verformung der Anschläge in radialer Richtung in axialer Richtung auf den rohrförmigen Abschnitt des Lamellenträgers aufgeschoben werden, wobei die Anschläge nach dem Erreichen der Befestigungsposition des Stützrings wieder in ihre ursprüngliche Form bzw. in ihre ursprüngliche Position zurückkehren können, in der der Stützring in axialer Richtung an den Anschlägen abgestützt ist. Hierbei ist es bevorzugt, wenn die Anschläge als Stützzungen ausgebildet sind. Wie bereits zuvor erläutert, können derartige Stützzungen durch Stanzen erzeugt werden. Die als Stützzungen ausgebildeten Anschläge ermöglichen im Gegensatz zu geprägten Anschlägen eine besonders einfache elastische Verformung in radialer Richtung, so dass sich die Montage besonders einfach gestaltet. Zwar können auch geprägte Anschläge zum Einsatz kommen, jedoch ist deren elastische Verformbarkeit in radialer Richtung nicht so stark ausgeprägt wie dies bei Anschlägen in Form von gestanzten Anschlägen bzw. Stützzungen der Fall ist.

Gemäß einer weiteren bevorzugten Ausführungsform der erfindungsgemäßen Lamellenträgeranordnung weisen die als Stützzungen ausgebildeten Anschläge jeweils ein freies Ende auf, das dem Stützring im Einbauzustand zugewandt ist. Somit sind die Stützzungen derart angeordnet, dass diese allein durch das Aufschieben des Stützrings auf den rohrförmigen Abschnitt des Lamellenträgers niedergedrückt werden. Im Einbauzustand sind die freien Enden der Stützzungen dem Stützring jedoch derart zugewandt, dass ein selbsttätiges Lösen des Stützrings durch eine axiale Verschiebung desselben und ein Niederdrücken der freien Enden der Stützzungen ausgeschlossen ist. Somit gewährleistet die Lamellenträgeranordnung in dieser Ausführungsform zum einen eine besonders einfache Montage und zum anderen eine sichere Festlegung des Stützrings in axialer Richtung, sobald sich der Stützring im Einbauzustand befindet.

Um die vorstehend genannten Vorteile weiter zu verstärken, ist der Stützring in einer weiteren bevorzugten Ausführungsform der erfindungsgemäßen Lamellenträgeranordnung in axialer Richtung an dem freien Ende der Stützzungen abstützbar oder abgestützt.

In einer weiteren vorteilhaften Ausführungsform der erfindungsgemäßen Lamellenträgeranordnung weist der Lamellenträger ferner einen im Wesentlichen radial verlaufenden Stützabschnitt auf. An seinem radial nach innen weisenden Ende kann der Stützabschnitt beispielsweise drehfest mit einer Ein- oder Ausgangsnabe verbunden sein. Bei dieser Ausführungsform ist der Lamellenträger somit im Wesentlichen topfförmig ausgebildet. Dabei ist der Stützring im Bereich des dem Stützabschnitt abgewandten Randes des rohrförmigen Abschnitts angeordnet. Hierunter ist beispielsweise zu verstehen, dass der Stützring bezogen auf die axialen Richtungen näher an dem dem Stützabschnitt abgewandten Rand des rohrförmigen Abschnitts als an dem Stützabschnitt selbst angeordnet ist. Dabei sollte der Stützring möglichst nah an dem dem Stützabschnitt abgewandten Rand des rohrförmigen Abschnitts angeordnet sein. Da die Gefahr einer Aufweitung aufgrund der Fliehkrafteinwirkung in dem genannten Bereich am größten ist, kann der in diesem Bereich angeordnete Stützring eine Aufweitung des rohrförmigen Abschnitts besonders wirkungsvoll einschränken bzw. verhindern.

Gemäß einer weiteren vorteilhaften Ausführungsform der erfindungsgemäßen Lamellenträgeranordnung ist der Stützabschnitt einstückig mit dem rohrförmigen Abschnitt ausgebildet. So können der Stützabschnitt und der rohrförmige Abschnitt beispielsweise im Rahmen eines Tiefziehprozesses gleichzeitig und einstückig hergestellt werden.

In einer weiteren besonders bevorzugten Ausführungsform der erfindungsgemäßen Lamellenträgeranordnung weist der rohrförmige Abschnitt einen Lamellentragabschnitt zur Aufnahme von Lamellen auf. Der Stützring ist bei dieser Ausführungsform derart an dem Lamellenträger angeordnet, dass dieser den Lamellentragabschnitt umgibt. Da der Lamellentragabschnitt in der Regel zuvor verformt werden muss, um eine Kontur zu haben, die die Aufnahme von Lamellen ermöglicht, neigt der Lamellentragabschnitt besonders stark zu einer Aufweitung bei starker Fliehkrafteinwirkung. Durch die Anordnung des Stützrings in einer den Lamellentragabschnitt umgebenden Position kann der Stützring die Aufweitung des rohrförmigen Abschnitts besonders wirkungsvoll unterdrücken.

In einer weiteren vorteilhaften Ausführungsform der erfindungsgemäßen Lamellenträgeranordnung ist der Lamellentragabschnitt in einem dem Stützabschnitt abgewandten Bereich des rohrförmigen Abschnitts ausgebildet und grenzt dabei vorzugsweise an den dem Stützabschnitt abgewandten Rand des rohrförmigen Abschnitts an. Wie bereits zuvor beschrieben, kann ein Stützring, der in diesem Bereich angeordnet ist, die Aufweitung des rohrförmigen Abschnitts des Lamellenträgers besonders wirkungsvoll unterdrücken.

Gemäß einer weiteren vorteilhaften Ausführungsform der erfindungsgemäßen Lamellenträgeranordnung weist der Lamellentragabschnitt ein Verzahnungsprofil zur drehfesten Aufnahme von Außenlamellen auf.

In einer besonders vorteilhaften Ausführungsform der erfindungsgemäßen Lamellenträgeranordnung weist der Lamellentragabschnitt in Umfangsrichtung verteilte, vorzugsweise wechselweise angeordnete, radial nach außen hervorstehende Axialstege und radial nach innen hervorstehende Axialstege zur Ausbildung des Verzahnungsprofils auf. Entsprechend sind zwischen den radial nach außen hervorstehenden Axialstegen äußere Axialnuten und zwischen den radial nach innen hervorstehenden Axialstegen innere Axialnuten ausgebildet. Um die Herstellung des Lamellentragabschnitts zu vereinfachen, sind dabei die Anschläge oder Vertiefungen zur Fixierung des Stützrings vorzugsweise an den radial nach außen hervorstehenden Axialstegen vorgesehen.

Gemäß einer weiteren vorteilhaften Ausführungsform der erfindungsgemäßen Lamellenträgeranordnung weist der rohrförmige Abschnitt, vorzugsweise der Lamellentragabschnitt Aussparungen für Fliehöl auf. Auf diese Weise kann das durch die Lamellenpakete strömende Öl besonders einfach radial nach außen gelangen. Da durch die Aussparungen innerhalb des rohrförmigen Abschnitts bzw. des Lamellentragabschnitts jedoch auch eine Schwächung des rohrförmigen Abschnitts bzw. des Lamellentragabschnitts bewirkt wird, neigen die genannten Abschnitte besonders stark zu einer Aufweitung unter Fliehkrafteinwirkung. Dank des in diesem Bereich angeordneten Stützrings wird dies jedoch verhindert, so dass eine Beschädigung des rohrförmigen Abschnitts selbst bei besonders großen bzw. besonders vielen Aussparungen für das Fliehöl ausgeschlossen ist.

In einer weiteren bevorzugten Ausführungsform der erfindungsgemäßen Lamellenträgeranordnung kann der Innendurchmesser des Stützrings verändert und festgelegt werden. Hierunter ist zu verstehen, dass der Innendurchmesser des Stützrings bei der Montage desselben an dem Lamellenträger - beispielsweise manuell - verändert werden kann. So kann der Stützring zunächst aufgeweitet werden, um diesen auf den Lamellenträger aufzuschieben. Anschließend kann der Innendurchmesser wieder verringert werden, um den Stützring von außen in Anlage an den rohrförmigen Abschnitt zu bringen. Abschließend kann der Innendurchmesser festgelegt werden, so dass sich dieser im Betrieb der Lamellenkupplung nicht mehr verändert. Bei einem derart ausgebildeten Stützring ist die Montage des Stützrings an dem Lamellenträger somit vereinfacht.

Gemäß einer weiteren vorteilhaften Ausführungsform der erfindungsgemäßen Lamellenträgeranordnung umfasst der Stützring ein Band oder Seil und einen Spannmechanismus, wobei das Band oder Seil eine Öse ausbildet, deren Durchmesser mit Hilfe des Spannmechanismus verkleinert, vorzugsweise auch vergrößert werden kann. So kann der Stützring beispielsweise in der Art einer Schelle ausgebildet sein, wobei bezüglich der Vorteile eines solchen Stützrings mit veränderbarem Innendurchmesser auf die vorangehende Beschreibung verwiesen sei.

In einer weiteren bevorzugten Ausführungsform der erfindungsgemäßen Lamellenträgeranordnung ist der Stützring separat von dem Lamellenträger ausgebildet und an dem Lamellenträger befestigt. Dies hat den Vorteil, dass sowohl der Stützring als auch der Lamellenträger besonders gezielt auf die ihnen zukommende Funktion abgestimmt werden können. So kann beispielsweise der Stützring aus einem Material gefertigt werden, das eine höhere Festigkeit als das Material des Lamellenträgers aufweist.

In einer weiteren besonders bevorzugten Ausführungsform der erfindungsgemäßen Lamellenträgeranordnung hat der Stützring eine höhere Festigkeit als der rohrförmige Abschnitt des Lamellenträgers. So kann der Stützring beispielsweise aus einem höherfesten Material als der rohrförmige Abschnitt des Lamellenträgers gefertigt sein.

In einer weiteren bevorzugten Ausführungsform der erfindungsgemäßen Lamellenträgeranordnung ist der Lamellenträger als Außenlamellenträger oder als Innenlamellenträger ausgebildet. Da bei einem Außenlamellenträger, der in der Regel einen besonders langen rohrförmigen Abschnitt aufweist und keinerlei radial außenliegende Bauteile aufweist, an denen der rohrförmige Abschnitt abstützbar wäre, die Gefahr einer Aufweitung aufgrund der Fliehkrafteinwirkung besonders groß ist, ist die Ausbildung des Lamellenträgers als Außenlamellenträger bevorzugt. Demgegenüber ist die Ausbildung des Lamellenträgers als Innenlamellenträger mit einem solchen Stützring jedoch auch von Vorteil. Zwar ist der rohrförmige Abschnitt eines Innenlamellenträgers regelmäßig kürzer ausgebildet, außerdem können bereits die radial außen an dem Innenlamellenträger angeordneten Innenlamellen einer Aufweitung des rohrförmigen Abschnitts entgegenwirken, jedoch kann eine Aufweitung des rohrförmigen Abschnitts dann dazu führen, dass die axiale Verschiebbarkeit der Innenlamellen eingeschränkt ist. Aus diesem Grunde ist es bevorzugt, dass der Stützring an dem Innenlamellenträger nicht als drehmomentübertragender Reibpartner, besonders bevorzugt gar nicht als Reibpartner ausgebildet ist. Dies bedeutet beispielsweise, dass der Stützring bei dieser alternativen Ausführungsform nicht als Innen- bzw. Reiblamelle ausgebildet ist, die der Drehmomentübertragung dient, und vorzugsweise gar keine Reibung zwischen dem Stützring und den zugehörigen Gegen- bzw. Außenlamellen auftritt. Auf diese Weise können die Innenlamellen einerseits und der Stützring andererseits exakt auf die Ihnen zugedachte Funktion, nämlich die Drehmomentübertragung einerseits und die Verhinderung einer Aufweitung des rohrförmigen Abschnitts andererseits, abgestimmt werden.

Die erfindungsgemäße Lamellenkupplung, die beispielsweise als Doppelkupplung ausgebildet sein kann, weist eine Lamellenträgeranordnung der erfindungsgemäßen Art auf, wobei vorzugsweise keine Mitnehmerscheibe für den Lamellenträger vorgesehen ist. Bei Lamellenkupplungen mit einer Mitnehmerscheibe steht die Mitnehmerscheibe meist mit dem dem Stützabschnitt abgewandten Rand des rohrförmigen Abschnitts des Lamellenträgers in Drehmitnahmeverbindung und kann auf diese Weise ebenfalls einer Aufweitung des rohrförmigen Abschnitts entgegenwirken. Ist jedoch keine Mitnehmerscheibe vorgesehen, so neigt der rohrförmige Abschnitt besonders stark dazu, sich in radialer Richtung aufzuweiten, so dass der Stützring bei einer Lamellenkupplung ohne Mitnehmerscheibe besonders wirkungsvoll eingesetzt werden kann.

In einer bevorzugten Ausführungsform der erfindungsgemäßen Lamellenkupplung ist zwar eine Mitnehmerscheibe vorgesehen, die in Drehmitnahmeverbindung mit dem Lamellenträger steht, jedoch ist der Stützring in diesem Fall separat von der Mitnehmerscheibe ausgebildet. Indem der Stützring sowohl separat von dem Lamellenträger als auch separat von der Mitnehmerscheibe ausgebildet ist, können die genannten Bauteile einen besonders einfachen Aufbau haben. Des Weiteren können die genannten Bauteile separat voneinander auf die ihnen zugedachte Funktion abgestimmt werden, ohne dass eine besondere Abstimmung mit dem jeweils anderen Bauteil notwendig ist. So sind insbesondere keine engen Toleranzen zu beachten, wie dies beispielsweise bei einem Stützring der Fall wäre, der einstückig mit der Mitnehmerscheibe ausgebildet ist.

Das erfindungsgemäße Verfahren zur Herstellung einer Lamellenträgeranordnung oder einer Lamellenkupplung der erfindungsgemäßen Art umfasst die Verfahrensschritte Bereitstellen eines Lamellenträgers mit einem rohrförmigen Abschnitt, an dem einstückig mit dem rohrförmigen Abschnitt ausgebildete, radial nach außen hervorstehende Anschläge oder/und radial nach innen zurückgesetzte Vertiefungen zum Fixieren eines Stützrings in axialer Richtung vorgesehen sind, und eines separaten geschlossenen Stützrings. Anschließend wird der Stützring an dem Lamellenträger mit Hilfe der radial nach außen hervorstehenden Anschläge oder/und der radial nach innen zurückgesetzten Vertiefungen befestigt, so dass dieser den rohrförmigen Abschnitt des Lamellenträgers umgibt. Dabei wird der Stützring form- und/oder kraftschlüssig an dem Lamellenträger befestigt, d. h. dieser wird nicht stoffschlüssig an dem Lamellenträger befestigt, so dass sich die Montage wesentlich einfacher und komplikationsfrei gestaltet. Wie bereits zuvor unter Bezugnahme auf die erfindungsgemäße Lamellenträgeranordnung erwähnt, kann durch die zunächst separate Herstellung des Stützrings und des Lamellenträgers eine gezielte Abstimmung der einzelnen Bauteile auf die ihnen zugedachte Funktion erfolgen. Darüber hinaus ist es möglich, den Stützring beispielsweise aus einem höherfesten Material zu fertigen, bevor der Stützring an dem Lamellenträger befestigt wird.

In einer besonders bevorzugten Ausführungsform des erfindungsgemäßen Verfahrens umfasst der Verfahrensschritt des Befestigens des Stützrings die Verfahrensschritte elastisches Zusammendrücken des rohrförmigen Abschnitts in radialer Richtung, Aufschieben des Stützrings auf den zusammengedrückten rohrförmigen Abschnitt und selbsttätiges Aufweiten des rohrförmigen Abschnitts. Bei dieser Ausführungsform des erfindungsgemäßen Verfahrens müssen demzufolge keine in radialer Richtung elastisch verformbaren Anschläge vorgesehen sein, da in diesem Fall der rohrförmige Abschnitt selbst in radialer Richtung zusammengedrückt wird, um eine Aufschieben des Stützrings zu ermöglichen. So können zur axialen Fixierung des Stützrings beispielsweise geprägte Anschläge oder Vertiefungen vorgesehen sein, da diese bei der vorliegenden Ausführungsform nicht elastisch zusammengedrückt werden müssen. Das elastische Zusammendrücken des rohrförmigen Abschnitts in radialer Richtung kann beispielsweise durch mehrere anliegende Stempel erfolgen, die eine radial nach innen gerichtete Kraft auf den rohrförmigen Abschnitt ausüben.

Gemäß einer weiteren besonders bevorzugten Ausführungsform des erfindungsgemäßen Verfahrens umfasst der Verfahrensschritt des Befestigens des Stützrings den Verfahrensschritt Aufschieben des Stützrings unter elastischer Verformung der Anschläge in radialer Richtung. Im Gegensatz zu der zuvor genannten Ausführungsform wird somit nicht der rohrförmige Abschnitt selbst, sondern vielmehr lediglich die Anschläge in radialer Richtung elastisch verformt. In diesem Fall empfehlen sich beispielsweise die zuvor beschriebenen Stützzungen als Anschläge.

In einer weiteren vorteilhaften Ausführungsform des erfindungsgemäßen Verfahrens umfasst der Verfahrensschritt des Befestigens des Stützrings die Verfahrensschritte Aufschieben des Stützrings auf den rohrförmigen Abschnitt und Zusammenziehen des Stützrings. Bei diesem Verfahren kommt demzufolge vorzugsweise ein Stützring mit veränderbarem und festlegbarem Innendurchmesser in Frage, dessen Aufbau bereits zuvor erläutert wurde. Trotz seines komplexeren Aufbaus ermöglicht der Stützring mit veränderbarem und festlegbarem Innendurchmesser somit eine besonders einfache und schnelle Montage desselben an dem Lamellenträger.

In einer weiteren vorteilhaften Ausführungsform des erfindungsgemäßen Verfahrens umfasst der Verfahrensschritt des Befestigens des Stützrings ferner den Verfahrensschritt Aufweiten des Stützrings vor dem Aufschieben des aufgeweiteten Stützrings auf den rohrförmigen Abschnitt.

Die Erfindung wird im Folgenden anhand beispielhafter Ausführungsformen unter Bezugnahme auf die beigefügten Zeichnungen näher erläutert. Es zeigen:
- Fig. 1: eine teilweise Seitenansicht einer Lamellenkupplung mit einer Ausfüh- rungsform der erfindungsgemäßen La- mellenträgeranordnung in geschnitte- ner Darstellung,
- Fig. 2: eine erste perspektivische Darstel- lung der Lamellenträgeranordnung von Fig. 1,
- Fig. 3: eine zweite perspektivische Darstel- lung der Lamellenträgeranordnung aus den Fig. 1 und 2,
- Fig. 4: den Ausschnitt A von Fig. 1 in einer ersten Ausführungsform,
- Fig. 5: den Ausschnitt A von Fig. 1 in einer zweiten Ausführungsform,
- Fig. 6: den Ausschnitt A von Fig. 1 in einer dritten Ausführungsform,
- Fig. 7: den Ausschnitt A von Fig. 1 in einer vierten Ausführungsform,
- Fig. 8: die Lamellenträgeranordnung von Fig. 6 während des Befestigens des Stütz- rings an dem Außenlamellenträger zur Veranschaulichung einer ersten Aus- führungsform des erfindungsgemäßen Verfahrens,
- Fig. 9: die Lamellenträgeranordnung von Fig. 7 während des Befestigens des Stütz- rings an dem Außenlamellenträger zur Veranschaulichung einer zweiten Aus- führungsform des erfindungsgemäßen Verfahrens,
- Fig. 10: eine fünfte Ausführungsform der er- findungsgemäßen Lamellenträgeranord- nung in schematischer Darstellung vor dem Befestigen des Stützrings und
- Fig. 11: die Lamellenträgeranordnung von Fig. 10 nach dem Befestigen des Stütz- rings.

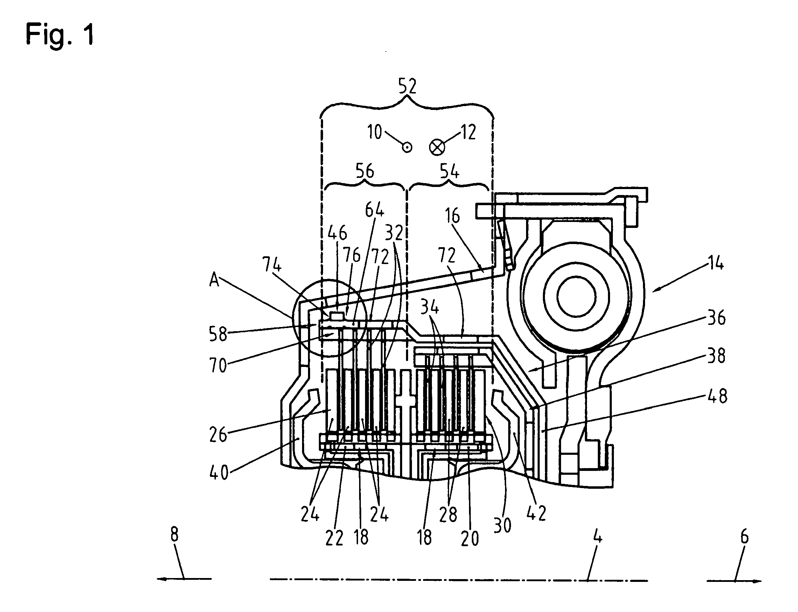

Fig. 1 zeigt eine Ausführungsform der erfindungsgemäßen Lamellenkupplung 2 im Querschnitt, wobei bezogen auf die Längs- bzw. Drehachse 4, um die sich die rotierbaren Teile der Lamellenkupplung 2 drehen, lediglich ein Abschnitt des oberen Teils dargestellt ist. Die beiden axialen Richtungen der Lamellenkupplung 2 sind anhand der Pfeile 6 und 8 dargestellt, während die Umfangsrichtungen der Lamellenkupplung 2 anhand der Pfeile 10 und 12 angedeutet sind. Die Lamellenkupplung 2 ist als nasslaufende Lamellenkupplung ausgebildet, wobei es sich im vorliegenden Beispiel um eine Doppelkupplung handelt.

Die Lamellenkupplung 2 weist einen Torsionsschwingungsdämpfer 14 auf, der einerseits mit einer nicht dargestellten motorseitigen Eingangswelle drehfest verbunden werden kann und andererseits in Drehmitnahmeverbindung mit einem Kupplungsgehäuse 16 steht. An seinem dem Torsionsschwingungsdämpfer 14 abgewandten Ende ist das Kupplungsgehäuse 16 drehfest mit einer nicht dargestellten Hülse verbunden, die die beiden nicht gezeigten Getriebeeingangswellen umgibt. Diese Hülse ist wiederum drehfest mit einem Innenlamellenträger 18 verbunden. Der Innenlamellenträger 18 umfasst einen in axialer Richtung 6 gelegenen ersten Lamellentragabschnitt 20 und einen in axialer Richtung 8 gelegenen zweiten Lamellentragabschnitt 22. Der erste Lamellentragabschnitt 20 dient der drehfesten Aufnahme von Innenlamellen 24 eines ersten Lamellenpakets 26, während der zweite Lamellentragabschnitt 22 der Aufnahme von Innenlamellen 28 eines zweiten Lamellenpakets 30 dient.

Das erste Lamellenpaket 26 umfasst ferner Außenlamellen 32, die in axialer Richtung 6 bzw. 8 mit den Innenlamellen 24 abwechselnd hintereinander angeordnet sind. Entsprechend umfasst das zweite Lamellenpaket 30 Außenlamellen 34, die in axialer Richtung 6 bzw. 8 mit den Innenlamellen 28 abwechselnd hintereinander angeordnet sind. Während die Außenlamellen 32 des ersten Lamellenpakets 26 in Drehmitnahmeverbindung mit einem ersten Außenlamellenträger 36 stehen, stehen die Außenlamellen 34 des zweiten Lamellenpakets 30 in Drehmitnahmeverbindung mit einem zweiten Außenlamellenträger 38, der in radialer Richtung innerhalb des ersten Außenlamellenträgers 36 angeordnet ist. Die beiden Außenlamellenträger 36, 38 stehen jeweils über eine nicht dargestellte radial innenliegende Ausgangsnabe mit einer der Getriebeeingangswellen in Drehmitnahmeverbindung. Jedem der beiden Lamellenpakete 26, 30 ist jeweils ein Betätigungskolben 40, 42 zugeordnet, mittels dessen das zugehörige Lamellenpaket 26, 30 zusammengedrückt werden kann.

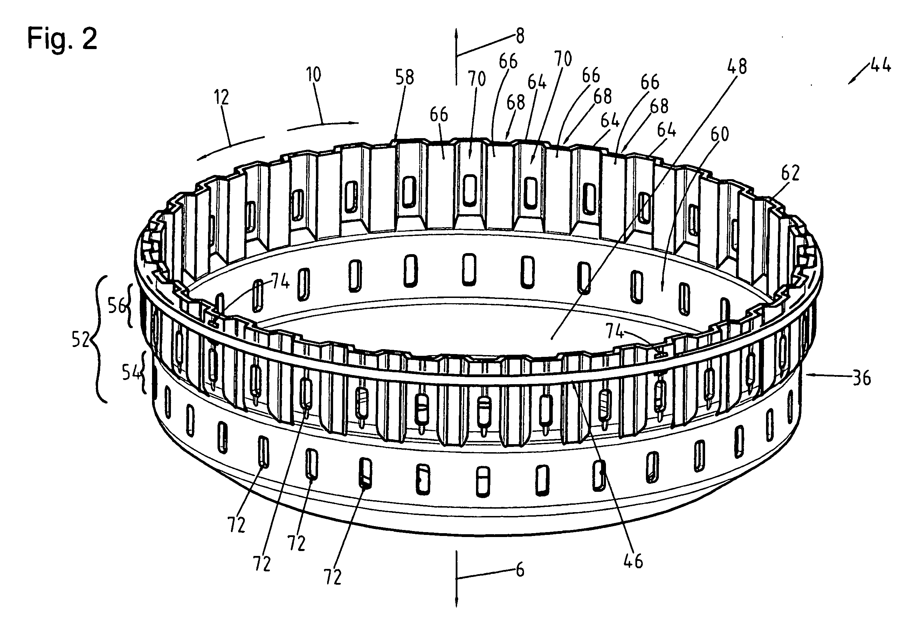

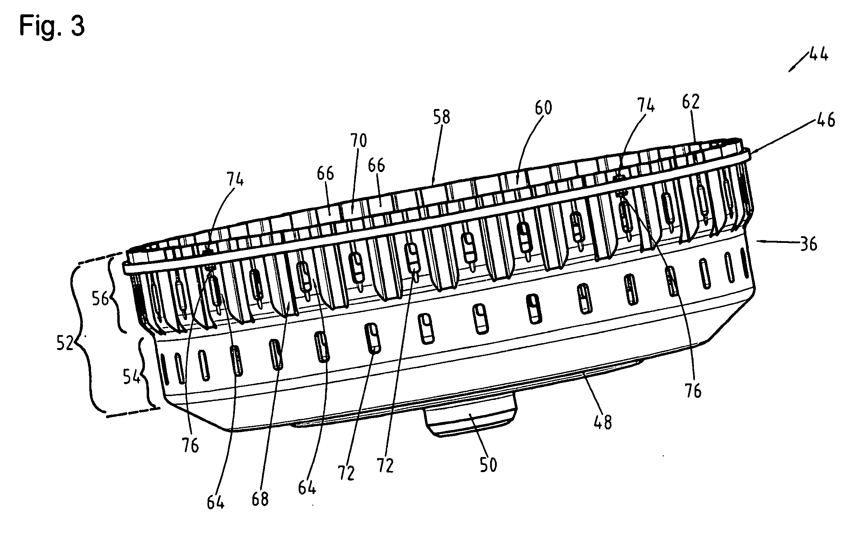

Nachstehend wird der weitere Aufbau des Außenlamellenträgers 36 unter Bezugnahme auf die Fig. 2 und 3 beschrieben, die jeweils eine perspektivische Darstellung einer Lamellenträgeranordnung 44 aus dem Außenlamellenträger 36 und einem Stützring 46 zeigen. Der Außenlamellenträger 36 weist einen im Wesentlichen tellerförmigen, sich radial nach außen erstreckenden Stützabschnitt 48 auf. An seinem radial nach innen weisenden Ende ist der Stützabschnitt 48 drehfest mit einer Ausgangsnabe 50 (Fig. 3) verbunden, über die der Außenlamellenträger 36 drehfest mit einer der beiden nicht dargestellten Getriebeeingangswellen verbindbar ist. An seinem radial nach außen weisenden Ende geht der Stützabschnitt 48 in einen rohrförmigen Abschnitt 52 des Außenlamellenträgers 36 über, wobei sich der einstückig mit dem Stützabschnitt 48 ausgebildete rohrförmige Abschnitt 52 ausgehend von dem Stützabschnitt 48 in die axiale Richtung 8 erstreckt. Dabei lässt sich der rohrförmige Abschnitt 52 in einen ersten Abschnitt 54, der dem Stützabschnitt 48 zugewandt ist bzw. an diesen angrenzt, und einen Lamellentragabschnitt 56 unterteilen, wobei letzterer in einem dem Stützabschnitt 48 abgewandten Bereich des rohrförmigen Abschnitts 52 ausgebildet ist. Wie aus den Fig. 1 bis 3 ersichtlich, bildet der Lamellentragabschnitt 56 an seiner dem ersten Abschnitt 54 abgewandten Seite den dem Stützabschnitt 48 abgewandten Rand 58 des rohrförmigen Abschnitts 52 aus. Somit grenzt der Lamellentragabschnitt 56 an den Rand 58 des rohrförmigen Abschnitts 52 an. Der Stützabschnitt 48 und der rohrförmige Abschnitt 52 in Form des ersten Abschnitts 54 und des Lamellentragabschnitts 56 bilden somit einen topfförmigen Außenlamellenträger 36 aus, dessen in axiale Richtung 8 weisende Öffnung 60 von dem Rand 58 umgeben ist.

Der Lamellentragabschnitt 56 dient der drehfesten Aufnahme der bereits unter Bezugnahme auf Fig. 1 beschriebenen Außenlamellen 32 des ersten Lamellenpakets 26 und weist zu diesem Zweck ein Verzahnungsprofil 62 auf. So weist der Lamellentragabschnitt 56 in Umfangsrichtung 10 bzw. 12 verteilte, wechselweise angeordnete, radial nach außen hervorstehende Axialstege 64 und radial nach innen hervorstehende Axialstege 66 zur Ausbildung des Verzahnungsprofils 62 auf, wobei zwischen den radial nach außen hervorstehenden Axialstegen 64 äußere Axialnuten 68 ausgebildet sind, während zwischen den nach innen hervorstehenden Axialstegen 66 innere Axialnuten 70 ausgebildet sind. Sowohl in dem Lamellentragabschnitt 56 als auch in dem ersten Abschnitt 54 des rohrförmigen Abschnitts 52 sind Aussparungen 72 für Fliehöl ausgebildet, wobei die Aussparungen 72 in dem Lamellentragabschnitt 56 in den radial nach außen hervorstehenden Axialstegen 64 ausgebildet sind.

Der Stützring 46 ist geschlossen ausgebildet, d. h. der Stützring 46 weist im Gegensatz zu den üblicherweise zur axialen Fixierung von Lamellen o. ä. verwendeten Sicherungsringen keine Unterbrechung auf, sondern ist vielmehr in Umfangsrichtung 10 bzw. 12 durchgehend ausgebildet. Um zu verhindern, dass sich der Lamellentragabschnitt 56 des rohrförmigen Abschnitts 52 unter Fliehkrafteinwirkung in radialer Richtung aufweitet, ist der Stützring 46 derart an dem Außenlamellenträger 36 befestigt, dass dieser den Lamellentragabschnitt 56 umgibt. Auf diese Weise ist der Lamellentragabschnitt 56 des rohrförmigen Abschnitts 52 in radialer Richtung nach außen an der Innenseite des Stützrings 46 abgestützt bzw. abstützbar, so dass ein Aufweiten des rohrförmigen Abschnitts 52 bzw. des Lamellentragabschnitts 56 in radialer Richtung sicher unterbunden wird.

Der Stützring 46, der separat von dem Außenlamellenträger 36 und somit nicht einstückig mit diesem ausgebildet ist, ist in der vorliegenden Ausführungsform aus einem Material gefertigt, dessen Festigkeit höher als die Festigkeit des Materials für den rohrförmigen Abschnitt 52 des Außenlamellenträgers 36 ist. Da die Gefahr einer Aufweitung des rohrförmigen Abschnitts 52 im Bereich des die Öffnung 60 umgebenden Randes 58 am größten ist, ist der Stützring 46 bezogen auf die axialen Richtungen 6 bzw. 8 im Bereich des dem Stützabschnitt 48 abgewandten Randes 58 des rohrförmigen Abschnitts 52 angeordnet. Es ist somit von Vorteil, den Stützring 46 möglichst nah an dem Rand 58 anzuordnen, so dass der Stützring 46 ein Aufweiten des rohrförmigen Abschnitts 52 in radialer Richtung besonders wirkungsvoll unterbinden kann.

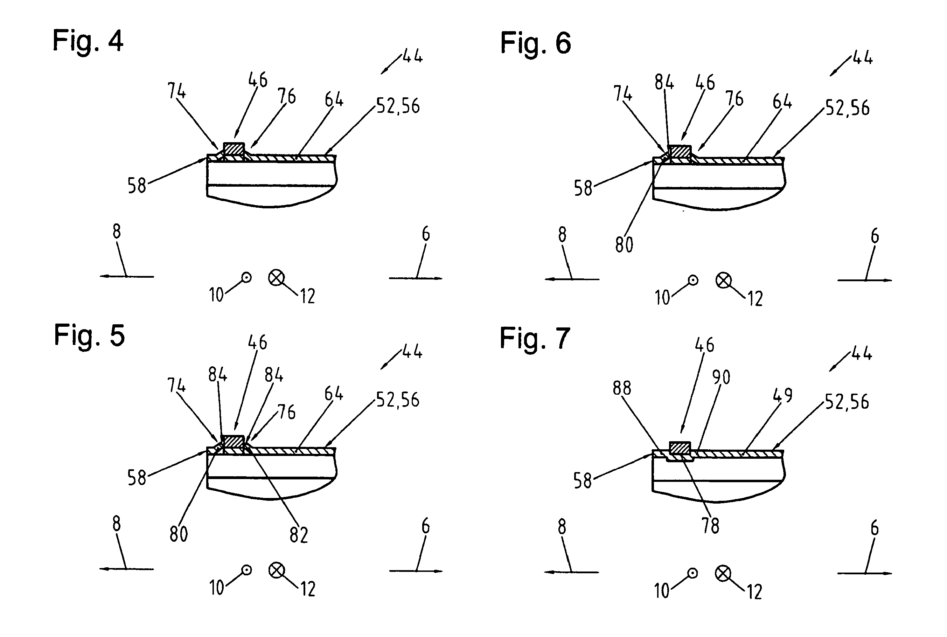

Der Stützring 46 kann sowohl spielbehaftet als auch klemmend von außen an dem rohrförmigen Abschnitt 52 bzw. dem Lamellentragabschnitt 56 anliegen. Darüber hinaus ist der Stützring 46 auch in axialer Richtung 6 bzw. 8 an dem Außenlamellenträger 36 festgelegt, so dass sich der Stützring 46 während des Betriebes nicht in axialer Richtung 6 bzw. 8 von dem Außenlamellenträger 36 lösen kann. Dabei kann der Stützring 46 gegebenenfalls spielbehaftet in axialer Richtung 6 bzw. 8 an dem Außenlamellenträger 36 festgelegt sein. Um die axiale Festlegung bzw. Fixierung des Stützrings 46 zu bewirken, sind an dem rohrförmigen Abschnitt 52 radial nach außen hervorstehende Anschläge 74 und 76 vorgesehen. Während die Anschläge 74 der Abstützung des Stützrings 46 in axialer Richtung 8 dienen, sind die Anschläge 76 derart angeordnet, dass diese den Stützring 46 in axialer Richtung 6 abstützen. Alternativ oder ergänzend zu dieser Ausführungsform können auch nach innen zurückgesetzte Vertiefungen 78 an dem rohrförmigen Abschnitt 52 vorgesehen sein, wie dies später unter Bezugnahme auf Fig. 7 erläutert wird. In beiden Fällen sind die Anschläge 74, 76 oder Vertiefungen 78 einstückig mit dem rohrförmigen Abschnitt 52 ausgebildet und vorzugsweise durch Prägen oder Stanzen erzeugt. Die Anschläge 74, 76 der vorliegenden Ausführungsform können in radialer Richtung nach innen elastisch verformt werden, so dass eine einfachere Montage des Stützrings 46 an dem rohrförmigen Abschnitt 52 des Außenlamellenträgers 36 möglich ist, wie dies später eingehender erläutert wird.

Nicht zuletzt dank der Anschläge 74, 76 bzw. der Vertiefungen 78 kann der Stützring 46 form- und/oder kraftschlüssig an dem Außenlamellenträger 36 befestigt werden. Eine stoffschlüssige Verbindung zwischen dem zunächst separaten Stützring 46 und dem rohrförmigen Abschnitt 52, die beispielsweise durch Schweißen erzeugt werden könnte, besteht somit nicht. Auf diese Weise ist ein Verziehen des Bauteils sowie eine Verschmutzung desselben, wie dies bei einem Schweißverfahren möglich ist, ausgeschlossen. Darüber hinaus ist die Montage des Stützrings 46 an dem rohrförmigen Abschnitt 52 erleichtert. Wie aus den Fig. 2 und 3 ferner ersichtlich ist, sind die Anschläge 74, 76 bzw. ist die Vertiefung 78 (Fig. 7) an den radial nach außen hervorstehenden Axialstegen 64 vorgesehen, wodurch der Fertigungsaufwand verringert wird.

Nachstehend werden unter Bezugnahme auf die Fig. 4 bis 7, die jeweils den Ausschnitt A von Fig. 1 vergrößert darstellen, unterschiedliche Ausführungsformen der Lamellenträgeranordnung 44 aus den Fig. 1 bis 3 beschrieben.

So zeigt Fig. 4 eine erste Ausführungsform der Lamellenträgeranordnung 44, die besonders einfach herzustellen ist. Die beiden Anschläge 74, 76 sind durch ein Prägen der Innenseite des nach außen hervorstehenden Axialsteges 64 hergestellt. Bei den durch einen Prägeprozess hergestellten Anschlägen 74, 76 bleibt der stoffliche Zusammenhalt zwischen den Anschlägen 74, 76 einerseits und dem Material des rohrförmigen Abschnitts 52 andererseits sowohl in den axialen Richtungen 6, 8 als auch in den Umfangsrichtungen 10, 12 erhalten. Dies hat den Vorteil, dass die Festigkeit des rohrförmigen Abschnitts 52 in diesem Bereich nicht so stark herabgesetzt ist. Allerdings ist auch die elastische Verformbarkeit der Anschläge 74, 76 in radialer Richtung nach innen nicht so stark ausgeprägt, wie dies bei der nachstehend beschriebenen Ausführungsform der Fall ist.

Fig. 5 zeigt eine zweite Ausführungsform der Lamellenträgeranordnung 44, bei der die Anschläge 74 und 76 jeweils als Stützzunge 80, 82 ausgebildet sind. Die Stützzungen 80, 82 wurden hierbei durch einen Stanzvorgang erzeugt, so dass der Stoffzusammenhalt zwischen den Stützzungen 80, 82 einerseits und dem übrigen Material des rohrförmigen Abschnitts 52 in mindestens einer der axialen Richtungen 6, 8 unterbrochen ist. Darüber hinaus ist es von Vorteil, wenn der Stoffzusammenhalt zwischen den Stützzungen 80, 82 einerseits und dem umgebenden Material des rohrförmigen Abschnitts 52 andererseits auch in beiden Umfangsrichtungen 10, 12 zumindest zum Teil unterbrochen ist. Dies kann beispielsweise durch das Einstanzen einer im Wesentlichen U-förmigen Aussparung in den nach außen hervorstehenden Axialsteg 64 bewirkt werden. So weist die Stützzunge 80 ein freies Ende 84 auf, das in die axiale Richtung 6 weist und an dem der Stützring 46 in axialer Richtung 8 abstützbar oder abgestützt ist. Dementsprechend weist auch die Stützzunge 82 ein in die axiale Richtung 8 weisendes freies Ende 86 auf, das dem Stützring 46 zugewandt ist und an dem der Stützring 46 in axialer Richtung 6 abstützbar oder abgestützt ist. Dank der besseren elastischen Verformbarkeit der Stützzungen 80, 82 in radialer Richtung nach innen kann der Stützring 46 besonders einfach an dem rohrförmigen Abschnitt 52 befestigt werden, indem dieser einfach in eine der axialen Richtungen 6, 8 auf den rohrförmigen Abschnitt 52 aufgeschoben wird. Bei der zweiten Ausführungsform ist das Aufschieben des Stützrings 46 auf den rohrförmigen Abschnitt 52 demzufolge in beiden axialen Richtungen 6 und 8 gleichermaßen einfach möglich. Sollte jedoch eine festgelegte Aufschieberichtung bestehen, so ist die nachstehend beschriebene Ausführungsform bevorzugt.

So zeigt Fig. 6 eine dritte Ausführungsform der Lamellenträgeranordnung 44, bei der es sich um eine Kombination aus der ersten und zweiten Ausführungsform nach den Fig. 4 und 5 handelt. Somit gilt die vorangehende Beschreibung der ersten und zweiten Ausführungsform entsprechend, soweit dieselben Bezugszeichen verwendet werden. Bei dieser in Fig. 6 gezeigten dritten Ausführungsform wird davon ausgegangen, dass der Stützring 46 in axialer Richtung 6 über den Rand 58 auf den rohrförmigen Abschnitt 52 geschoben werden muss bzw. soll, um eine Befestigung desselben an dem Außenlamellenträger 36 zu bewirken. Um dies zu vereinfachen und gleichzeitig eine allzu starke Schwächung des rohrförmigen Abschnitts 52 im Bereich der Anschläge 74, 76 zu verhindern, ist der Anschlag 74, der näher an dem Rand 58 angeordnet ist als der Anschlag 76, als gestanzter Anschlag 74 in Form der Stützzunge 80 ausgebildet. Demgegenüber ist der Anschlag 76, der weiter von dem Rand 58 entfernt ist als der Anschlag 74 in Form der Stützzunge 80, als geprägter Anschlag 76 im Sinne der Beschreibung zu Fig. 4 ausgebildet. So ermöglicht die Stützzunge 80 ein einfaches Aufschieben des Stützrings 46 auf den rohrförmigen Abschnitt 52, während der geprägte Anschlag 76 eine sichere Abstützung des Stützrings 46 in axialer Richtung 6 ermöglicht, ohne dabei den rohrförmigen Abschnitt 52 im Bereich des Anschlags 76 zu stark zu schwächen. Sollte die vorbestimmte Aufschieberichtung für den Stützring 46 der axialen Richtung 8 entsprechen, so ist eine entsprechend umgekehrte Ausbildung der Anschläge 74, 76 von Vorteil.

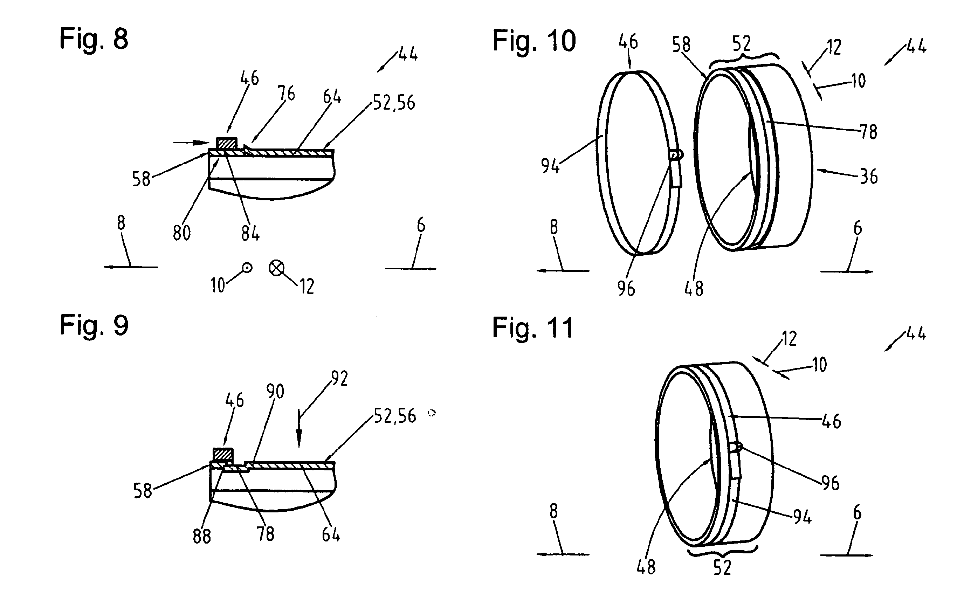

Fig. 7 zeigt eine vierte Ausführungsform der Lamellenträgeranordnung 44, auf die bereits unter Bezugnahme auf die Fig. 1 bis 3 eingegangen wurde. So wird die axiale Fixierung bzw. Festlegung des Stützrings 46 an dem rohrförmigen Abschnitt 52 bei dieser Ausführungsform durch Vertiefungen 78 in den nach außen hervorstehenden Axialstegen 64 bewirkt, indem der Stützring 46 in den Vertiefungen 78 einliegt und in axialer Richtung 8 an einem ersten Rand 88 der Vertiefung 78 und in axialer Richtung 6 an einem zweiten Rand 90 der Vertiefung 78 abgestützt bzw. abstützbar ist. Auf die Möglichkeiten einer Befestigung des Stützrings 46 an dem rohrförmigen Abschnitt 52 bei dieser Ausführungsform wird später näher unter Bezugnahme auf die Fig. 9 bis 11 eingegangen.

Nachstehend werden unter Bezugnahme auf die Fig. 8 bis 11 Ausführungsformen des erfindungsgemäßen Verfahrens zur Herstellung der Lamellenträgeranordnungen 44 bzw. der Lamellenkupplung 2 beschrieben. Alle nachstehend beschriebenen Ausführungsformen des Verfahrens haben die Gemeinsamkeit, dass zunächst ein Außenlamellenträger 36 mit einem rohrförmigen Abschnitt 52 und ein separat von dem Außenlamellenträger 36 ausgebildeter, geschlossener Stützring 46 bereitgestellt wird, der anschließend form- und/oder kraftschlüssig an dem Außenlamellenträger 36 befestigt wird, so dass dieser den rohrförmigen Abschnitt 52 des Außenlamellenträgers 36 umgibt.

So verdeutlicht Fig. 8 die Vorgehensweise bei der Herstellung der in den Fig. 4 bis 6 dargestellten Ausführungsformen der Lamellenträgeranordnung 44, wobei speziell auf die Herstellung der dritten Ausführungsform gemäß Fig. 6 eingegangen wird. Bei dieser Ausführungsform kann ein starrer Stützring 46 verwendet werden, dessen Innendurchmesser im Wesentlichen unveränderbar ist. Um den Stützring 46 an dem rohrförmigen Abschnitt 52 zu befestigen, wird dieser in axialer Richtung 6 über den Rand 58 des rohrförmigen Abschnitts 52 aufgeschoben, so dass der Anschlag 74 in Form der Stützzunge 80 durch den Stützring 46 niedergedrückt bzw. in radialer Richtung nach innen elastisch verformt wird. Aufgrund der Elastizität des Anschlags 74 in radialer Richtung, kehrt der Anschlag 74 in Form der Stützzunge 80 nach dem Erreichen der Befestigungsposition des Stützrings 46 wieder in seine in Fig. 6 gezeigte Ausgangsposition zurück, so dass der Stützring 46 in axialer Richtung 8 an dem freien Ende 84 des Anschlags 74 und in axialer Richtung 6 an dem Anschlag 76 abgestützt bzw. abstützbar ist.

Fig. 9 zeigt eine zweite Ausführungsform des erfindungsgemäßen Verfahrens, die insbesondere bei der Herstellung der Lamellenträgeranordnung 44 gemäß der vierten Ausführungsform nach Fig. 7 zum Einsatz kommen kann, jedoch kann diese zweite Ausführungsform des Verfahrens auch zur Herstellung der Lamellenträgeranordnungen 44 aus den Fig. 4 bis 6 verwendet werden. Die zweite Ausführungsform nach Fig. 9 ist dabei wiederum insbesondere für einen Stützring 46 konzipiert, der starr ausgebildet ist und einen im Wesentlichen unveränderbaren Innendurchmesser aufweist. Um den Stützring 46 an dem rohrförmigen Abschnitt 52 zu befestigen, wird zunächst der rohrförmige Abschnitt 52 in radialer Richtung nach innen elastisch zusammengedrückt, wie dies anhand des Pfeils 92 in Fig. 9 angedeutet ist. Hierdurch reduziert sich der Außendurchmesser des rohrförmigen Abschnitts 52, so dass der Stützring 46 nunmehr über den Rand 58 in axialer Richtung 6 auf den zusammengedrückten rohrförmigen Abschnitt 52 aufgeschoben werden kann. Sobald der Stützring 46 die Einbauposition in axialer Richtung 6 bzw. 8 erreicht hat, wird der in radialer Richtung auf den rohrförmigen Abschnitt 52 aufgebrachte Druck aufgehoben, so dass sich der rohrförmige Abschnitt 52 wieder selbsttätig in radialer Richtung nach außen aufweiten kann. Hierdurch gelangt der Stützring 46 in die Vertiefung 78 und ist in den axialen Richtungen 6 bzw. 8 an den Rändern 90 bzw. 88 abgestützt.

Die Fig. 10 und 11 zeigen eine fünfte Ausführungsform der Lamellenträgeranordnung 44 bzw. deren Herstellungsverfahren, wobei der Außenlamellenträger 36 und der Stützring 46 lediglich schematisch angedeutet sind. Bei der fünften Ausführungsform kommt anstelle eines starren Stützrings mit unveränderbarem Innendurchmesser ein Stützring 46 zum Einsatz, dessen Innendurchmesser verändert werden kann. Zu diesem Zweck wird der Stützring 46 von einem Band oder Seil 94 und einem an dem Band 94 angeordneten Spannmechanismus 96 gebildet. Das Band 94, das beispielsweise als bandförmiges Blech ausgebildet sein kann, ist derart mit dem Spannmechanismus 96 verbunden, dass das Band 94 eine Öse ausbildet, deren Durchmesser mit Hilfe des Spannmechanismus 96 vergrößert und verkleinert werden kann. So kann der Stützring 46 beispielsweise in der Art einer Schelle ausgebildet sein. An dem rohrförmigen Abschnitt 52 des Außenlamellenträgers 36 können wiederum eine oder mehrere Vertiefungen 78 zur Aufnahme des Stützrings 46 vorgesehen sein.

Um den Stützring 46 an dem rohrförmigen Abschnitt 52 des Außenlamellenträgers 36 zu befestigen, kann der Innendurchmesser desselben zunächst mit Hilfe des Spannmechanismus 96 vergrößert werden. Anschließend kann der somit aufgeweitete Stützring 46 über den Rand 58 in axialer Richtung 6 auf den rohrförmigen Abschnitt 52 aufgeschoben werden, was sich aufgrund des großen Innendurchmessers des Stützrings 46 besonders einfach gestaltet. Sobald der Stützring 46 bezogen auf die axialen Richtungen 6 bzw. 8 seine Befestigungsposition erreicht hat, wird der Innendurchmesser des Stützrings 46 mit Hilfe des Spannmechanismus 96 wieder reduziert, d. h. der Stützring 46 wird zusammengezogen, bis der Stützring 46 bzw. das Band 94 in der oder den Vertiefungen 78 einliegt und somit in den axialen Richtungen 6 und 8 an dem rohrförmigen Abschnitt 52 festgelegt ist. Der Spannmechanismus 96 ist dabei derart ausgebildet, dass der Innendurchmesser des Stützrings 46 nach dem Erreichen der Befestigungsposition, die in Fig. 11 gezeigt ist, festgelegt werden kann, so dass sich die von dem Band 94 umschlossene Öse während des Betriebs der Lamellenkupplung 2 nicht mehr aufweiten kann. Bei dieser Ausführungsform der Lamellenträgeranordnung 44 ist somit eine besonders einfache Montage des Stützrings 46 an dem rohrförmigen Abschnitt 52 des Außenlamellenträgers 36 möglich.

Bei der in Fig. 1 gezeigten bevorzugten Ausführungsform der Lamellenkupplung 2 ist keine Mitnehmerscheibe für den Außenlamellenträger 36 vorgesehen, die auf Seiten der Öffnung 60 angeordnet wäre und mit dem Rand 58 bzw. dem rohrförmigen Abschnitt 52 in Drehmitnahmeverbindung stünde. Somit neigt der Außenlamellenträger 36 in dieser Ausführungsform besonders stark dazu, sich unter Fliehkrafteinwirkung im Bereich des rohrförmigen Abschnitts 52 in radialer Richtung aufzuweiten, zumal keine Mitnehmerscheibe vorgesehen ist, die dieser Aufweitung zumindest teilweise entgegenwirken könnte. Somit ist der Einsatz der Lamellenträgeranordnung 44 bei einer Lamellenkupplung 2 ohne Mitnehmerscheibe für den Außenlamellenträger 36 besonders vorteilhaft.

Die vorliegende Erfindung erstreckt sich jedoch auch auf eine Lamellenkupplung 2 mit einer Mitnehmerscheibe, die in Drehmitnahmeverbindung mit dem Außenlamellenträger 36 steht und gegebenenfalls vor der Öffnung 60 im Bereich des Randes 58 des Außenlamellenträgers 36 angeordnet ist. In diesem Fall ist es jedoch bevorzugt, dass der Stützring 46 separat von der Mitnehmerscheibe und nicht einstückig mit dieser ausgebildet ist. Hierdurch können die einzelnen Bauteile in Form des Außenlamellenträgers 36, des Stützrings 46 und der Mitnehmerscheibe besser auf die ihnen zugedachte Funktion abgestimmt werden. Darüber hinaus ist die Fertigung der Mitnehmerscheibe sowie deren Montage an dem Außenlamellenträger 36 vereinfacht.

### Bezugszeichenliste

- 2: Lamellenkupplung
- 4: Drehachse
- 6: axiale Richtung
- 8: axiale Richtung
- 10: Umfangsrichtung
- 12: Umfangsrichtung
- 14: Torsionsschwingungsdämpfer
- 16: Kupplungsgehäuse
- 18: Innenlamellenträger
- 20: erster Lamellentragabschnitt
- 22: zweiter Lamellentragabschnitt
- 24: Innenlamellen
- 26: erstes Lamellenpaket
- 28: Innenlamellen
- 30: zweites Lamellenpaket
- 32: Außenlamellen
- 34: Außenlamellen
- 36: erster Außenlamellenträger
- 38: zweiter Außenlamellenträger
- 40: Betätigungskolben
- 42: Betätigungskolben
- 44: Lamellenträgeranordnung
- 46: Stützring
- 48: Stützabschnitt
- 50: Ausgangsnabe
- 52: rohrförmige Abschnitt
- 54: erster Abschnitt
- 56: Lamellentragabschnitt
- 58: Rand
- 60: Öffnung
- 62: Verzahnungsprofil
- 64: nach außen hervorstehende Axialstege
- 66: nach innen hervorstehende Axialstege
- 68: äußere Axialnuten
- 70: innere Axialnuten
- 72: Aussparungen
- 74: Anschläge
- 76: Anschläge
- 78: Vertiefungen
- 80: Stützzunge
- 82: Stützzunge
- 84: freies Ende
- 86: freies Ende
- 88: erster Rand
- 90: zweiter Rand
- 92: Pfeil
- 94: Band / Seil
- 96: Spannmechanismus

## Patentansprüche

1. Lamellenträgeranordnung (44) für eine Lamellenkupplung (2) mit einem Lamellenträger (36), der einen rohrförmigen Abschnitt (52) aufweist, und einem den rohrförmigen Abschnitt (52) umgebenden, geschlossenen Stützring (46), der an dem Lamellenträger (36) befestigt ist und an dem der rohrförmige Abschnitt (52) in radialer Richtung abgestützt oder abstützbar ist, wobei der Stützring (46) in axialer Richtung (6, 8) form- und/oder kraftschlüssig an dem Lamellenträger (36) festgelegt ist, **dadurch gekennzeichnet, dass** radial nach außen hervorstehende Anschläge (74, 76) und/oder radial nach innen zurückgesetzte Vertiefungen (78) zur Fixierung des Stützrings (46) in axialer Richtung (6, 8) an dem rohrförmigen Abschnitt (52) vorgesehen sind, die einstückig mit dem rohrförmigen Abschnitt (52) ausgebildet sind.

2. Lamellenträgeranordnung (44) nach Anspruch 1, **dadurch gekennzeichnet, dass** der Stützring (46) spielbehaftet oder klemmend von außen an dem rohrförmigen Abschnitt (52) anliegt.

3. Lamellenträgeranordnung (44) nach einem der Ansprüche 1 oder 2, **dadurch gekennzeichnet, dass** der Stützring (46) spielbehaftet an dem Lamellenträger (36) festgelegt ist oder/und die Anschläge (74, 76) oder Vertiefungen (78) durch Prägen oder Stanzen erzeugt sind.

4. Lamellenträgeranordnung (44) nach Anspruch 3, **dadurch gekennzeichnet, dass** die Anschläge (74, 76) in radialer Richtung elastisch verformbar, vorzugsweise als Stützzungen (80, 82) ausgebildet sind.

5. Lamellenträgeranordnung (44) nach Anspruch 4, **dadurch gekennzeichnet, dass** die Stützzungen (80, 82) jeweils ein freies Ende (84, 86) aufweisen, das dem Stützring (46) im Einbauzustand zugewandt ist, wobei der Stützring (46) vorzugsweise in axialer Richtung (6, 8) an dem freien Ende (84, 86) der Stützzungen (80, 82) abstützbar oder abgestützt ist.

6. Lamellenträgeranordnung (44) nach einem der vorangehenden Ansprüche, **dadurch gekennzeichnet, dass** der Lamellenträger (36) ferner einen im Wesentlichen radial verlaufenden Stützabschnitt (48) aufweist, wobei der Stützring (46) im Bereich des dem Stützabschnitt (48) abgewandten Randes (58) des rohrförmigen Abschnitts (52) angeordnet ist und der Stützabschnitt (48) vorzugsweise einstückig mit dem rohrförmigen Abschnitt (52) ausgebildet ist.

7. Lamellenträgeranordnung (44) nach einem der vorangehenden Ansprüche, **dadurch gekennzeichnet, dass** der rohrförmige Abschnitt (52) einen Lamellentragabschnitt (56) zur Aufnahme von Lamellen aufweist, der von dem Stützring (46) umgeben ist, wobei der Lamellentragabschnitt (56) vorzugsweise in einem dem Stützabschnitt (48) abgewandten Bereich des rohrförmigen Abschnitts (52) ausgebildet ist, gegebenenfalls an den dem Stützabschnitt (48) abgewandten Rand (58) des rohrförmigen Abschnitts (52) angrenzt, oder/und der Lamellentragabschnitt (56) vorzugsweise ein Verzahnungsprofil (62) zur drehfesten Aufnahme von Lamellen (32) aufweist, wobei der Lamellentragabschnitt (56) besonders bevorzugt in Umfangsrichtung (10, 12) verteilte, gegebenenfalls wechselweise angeordnete, radial nach außen hervorstehende Axialstege (64) und radial nach innen hervorstehende Axialstege (66) zur Ausbildung des Verzahnungsprofils (62) aufweist, und die Anschläge (74, 76) oder Vertiefungen (78) zur Fixierung des Stützrings (46) vorzugsweise an den radial nach außen hervorstehenden Axialstegen (64) vorgesehen sind.

8. Lamellenträgeranordnung (44) nach einem der vorangehenden Ansprüche, **dadurch gekennzeichnet, dass** der rohrförmige Abschnitt (52), vorzugsweise der Lamellentragabschnitt (56) Aussparungen (72) für Fliehöl aufweist.

9. Lamellenträgeranordnung (44) nach einem der vorangehenden Ansprüche, **dadurch gekennzeichnet, dass** der Innendurchmesser des Stützrings (46) veränderbar und festlegbar ist, wobei der Stützring (46) vorzugsweise ein Band oder Seil (94) und einen Spannmechanismus (96) umfasst und das Band oder Seil (94) eine Öse ausbildet, deren Durchmesser mit Hilfe des Spannmechanismus (96) verkleinerbar, besonders bevorzugt auch vergrößerbar ist.

10. Lamellenträgeranordnung (44) nach einem der vorangehenden Ansprüche, **dadurch gekennzeichnet, dass** der Stützring (46) separat von dem Lamellenträger (36) ausgebildet und an dem Lamellenträger (36) befestigt ist oder/und eine höhere Festigkeit als der rohrförmige Abschnitt (52) des Lamellenträgers (36) hat.

11. Lamellenträgeranordnung (44) nach einem der vorangehenden Ansprüche, **dadurch gekennzeichnet, dass** der Lamellenträger (36) ein Außenlamellenträger oder ein Innenlamellenträger ist, wobei der Stützring an dem Innenlamellenträger vorzugsweise nicht als drehmomentübertragender Reibpartner, besonders bevorzugt gar nicht als Reibpartner ausgebildet ist.

12. Lamellenkupplung (2) mit einer Lamellenträgeranordnung (44) nach einem der vorangehenden Ansprüche, wobei vorzugsweise keine Mitnehmerscheibe für den Lamellenträger (36) oder eine Mitnehmerscheibe vorgesehen ist, die in Drehmitnahmeverbindung mit dem Lamellenträger (36) steht, wobei der Stützring (46) separat von der Mitnehmerscheibe ausgebildet ist.

13. Verfahren zur Herstellung einer Lamellenträgeranordnung (44) nach einem der Ansprüche 1-11 oder einer Lamellenkupplung (2) nach Anspuch 12 nach einem mit den Verfahrensschritten
Bereitstellen eines Lamellenträgers (36) mit einem rohrförmigen Abschnitt (52), an dem einstückig mit dem rohrförmigen Abschnitt (52) ausgebildete, radial nach außen hervorstehende Anschläge (74, 76) oder/und radial nach innen zurückgesetzte Vertiefungen (78) zur Fixierung eines Stützrings (46) in axialer Richtung vorgesehen sind, und eines separaten geschlossenen Stützrings (46) und
Befestigen des Stützrings (46) an dem Lamellenträger (36), so dass dieser den rohrförmigen Abschnitt (52) des Lamellenträgers (36) umgibt,
wobei der Stützring (46) mit Hilfe der radial nach außen hervorstehenden Anschläge (74, 76) oder/und der radial nach innen zurückgesetzten Vertiefungen (78) form- und/oder kraftschlüssig an dem Lamellenträger (36) befestigt wird.

14. Verfahren nach Anspruch 13, **dadurch gekennzeichnet, dass** der Verfahrensschritt des Befestigens des Stützrings (46) die Verfahrensschritte
elastisches Zusammendrücken des rohrförmigen Abschnitts (52) in radialer Richtung,
Aufschieben des Stützrings (46) auf den zusammengedrückten rohrförmigen Abschnitt (52) und
selbsttätiges Aufweiten des rohrförmigen Abschnitts (52) umfasst.

15. Verfahren nach Anspruch 13, **dadurch gekennzeichnet, dass** der Verfahrensschritt des Befestigens des Stützrings (46) den Verfahrensschritt
Aufschieben des Stützrings (46) unter elastischer Verformung der Anschläge (74, 76) in radialer Richtung umfasst.

## Claims

1. Plate carrier arrangement (44) for a multiplate clutch (2), having a plate carrier (36) which has a tubular portion (52) and having a closed supporting ring (46) which surrounds the tubular portion (52) and which is fastened to the plate carrier (36) and on which the tubular portion (52) is or can be supported in the radial direction, wherein the supporting ring (46) is fixed in a positively locking and/or non-positively locking manner in the axial direction (6, 8) to the plate carrier (36), **characterized in that** radially outwardly projecting stops (74, 76) and/or radially inwardly recessed depressions (78) are provided for fixing the supporting ring (46) in the axial direction (6, 8) to the tubular portion (52), which stops and/or depressions are formed in one piece with the tubular portion (52).

2. Plate carrier arrangement (44) according to Claim 1, **characterized in that** the supporting ring (46) bears with play or in a clamping manner against the tubular portion (52) from the outside.

3. Plate carrier arrangement (44) according to either of Claims 1 and 2, **characterized in that** the supporting ring (46) is fixed with play to the plate carrier (36) and/or the stops (74, 76) or depressions (78) are produced by embossing or punching.

4. Plate carrier arrangement (44) according to Claim 3, **characterized in that** the stops (74, 76) are elastically deformable in the radial direction, and are designed preferably as supporting tongues (80, 82).

5. Plate carrier arrangement (44) according to Claim 4, **characterized in that** the supporting tongues (80, 82) have in each case one free end (84, 86) which faces towards the supporting ring (46) in the installed state, wherein the supporting ring (46) is or can be supported preferably in the axial direction (6, 8) on the free end (84, 86) of the supporting tongues (80, 82).

6. Plate carrier arrangement (44) according to one of the preceding claims, **characterized in that** the plate carrier (36) also has a substantially radially running supporting portion (48), wherein the supporting ring (46) is arranged in the region of that edge (58) of the tubular portion (52) which faces away from the supporting portion (48), and the supporting portion (48) is formed preferably in one piece with the tubular portion (52).

7. Plate carrier arrangement (44) according to one of the preceding claims, **characterized in that** the tubular portion (52) has a plate carrying portion (56) for holding plates, which plate carrying portion (56) is surrounded by the supporting ring (46), wherein the plate carrying portion (56) is formed preferably in a region of the tubular portion (52) facing away from the supporting portion (48), if appropriate adjoins that edge (58) of the tubular portion (52) which faces away from the supporting portion (48), and/or the plate carrying portion (56) preferably has a toothing profile (62) for holding plates (32) in a rotationally conjoint manner, wherein the plate carrying portion (56) particularly preferably has radially outwardly projecting axial webs (64) and radially inwardly projecting axial webs (66) for forming the toothing profile (62), said axial webs being distributed in the circumferential direction (10, 12) and if appropriate being arranged in an alternating manner, and the stops (74, 76) or depressions (78) for fixing the supporting ring (46) are provided preferably on the radially outwardly projecting axial webs (64).

8. Plate carrier arrangement (44) according to one of the preceding claims, **characterized in that** the tubular portion (52), preferably the plate carrying portion (56), has cutouts (72) for centrifuged oil.

9. Plate carrier arrangement (44) according to one of the preceding claims, **characterized in that** the inner diameter of the supporting ring (46) can be varied and fixed, wherein the supporting ring (46) preferably comprises a strap or cable (94) and a tensioning mechanism (96), and the strap or cable (94) forms a loop, the diameter of which can be reduced in size, and particularly preferably also enlarged, by means of the tensioning mechanism (96).

10. Plate carrier arrangement (44) according to one of the preceding claims, **characterized in that** the supporting ring (46) is formed separately from the plate carrier (36) and is fastened to the plate carrier (36) and/or has a higher strength than the tubular portion (52) of the plate carrier (36).

11. Plate carrier arrangement (44) according to one of the preceding claims, **characterized in that** the plate carrier (36) is an outer plate carrier or an inner plate carrier, wherein the supporting ring on the inner plate carrier is formed preferably not as a torque-transmitting friction partner, particularly preferably not as a friction partner at all.

12. Multiplate clutch (2) having a plate carrier arrangement (44) according to one of the preceding claims, wherein it is preferable for no driver disc for the plate carrier (36) to be provided or for a driver disc to be provided which is in rotationally driving connection with the plate carrier (36), wherein the supporting ring (46) is formed separately from the driver disc.

13. Method for manufacturing a plate carrier arrangement (44) according to one of Claims 1-11 or a multiplate clutch (2) according to Claim 12, having the method steps:
providing a plate carrier (36) having a tubular portion (52) on which are provided radially outwardly projecting stops (74, 76) and/or radially inwardly recessed depressions (78), which stops and/or depressions are formed in one piece with the tubular portion (52), for fixing a supporting ring (46) in the axial direction, and providing a separate closed supporting ring (46), and
fastening the supporting ring (46) to the plate carrier (36) such that said supporting ring surrounds the tubular portion (52) of the plate carrier (36),
wherein the supporting ring (46) is fastened to the plate carrier (36) in a positively locking and/or non-positively locking manner by means of the radially outwardly projecting stops (74, 76) and/or the radially inwardly recessed depressions (78).

14. Method according to Claim 13, **characterized in that** the method step of fastening the supporting ring (46) comprises the method steps:
elastically compressing the tubular portion (52) in the radial direction,
pushing the supporting ring (46) onto the compressed tubular portion (52), and
automatic expansion of the tubular portion (52).

15. Method according to Claim 13, **characterized in that** the method step of fastening the supporting ring (46) comprises the method step:
pushing the supporting ring (46) on with elastic deformation of the stops (74, 76) in the radial direction.

## Revendications

1. Agencement de support de disques (44) pour un embrayage à disques (2) comprenant un support de disques (36), qui présente une portion tubulaire (52), et une bague de support (46) fermée, entourant la portion tubulaire (52), qui est fixée sur le support de disques (36) et sur laquelle est ou peut être supportée la portion tubulaire (52) dans la direction radiale, la bague de support (46) étant fixée dans la direction axiale (6, 8) par engagement par coopération de forme et/ou par force sur le support de disques (36), **caractérisé en ce que** des butées saillant radialement vers l'extérieur (74, 76) et/ou des renfoncements (78) en retrait radialement vers l'intérieur sont prévus pour la fixation de la bague de support (46) dans la direction axiale (6, 8) sur la portion tubulaire (52), lesquelles sont réalisées d'une seule pièce avec la portion tubulaire (52).

2. Agencement de support de disques (44) selon la revendication 1, **caractérisé en ce que** la bague de support (46) s'applique avec un certain jeu ou de manière serrée depuis l'extérieur contre la portion tubulaire (52).

3. Agencement de support de disques (44) selon l'une quelconque des revendications 1 ou 2, **caractérisé en ce que** la bague de support (46) est fixée avec un certain jeu sur le support de disques (36) et/ou les butées (74 ; 76) ou les renfoncements (78) sont produits par gaufrage ou estampage.

4. Agencement de support de disques (44) selon la revendication 3, **caractérisé en ce que** les butées (74, 76) peuvent être déformées élastiquement dans la direction radiale, de préférence sont réalisées sous forme de langues de support (80, 82).

5. Agencement de support de disques (44) selon la revendication 4, **caractérisé en ce que** les langues de support (80, 82) présentent à chaque fois une extrémité libre (84, 86), qui est tournée vers la bague de support (46) dans l'état monté, la bague de support (46) étant ou pouvant être supportée de préférence dans la direction axiale (6, 8) sur l'extrémité libre (84, 86) des langues de support (80, 82).

6. Agencement de support de disques (44) selon l'une quelconque des revendications précédentes, **caractérisé en ce que** le support de disques (36) présente en outre un portion de support (48) s'étendant essentiellement radialement, la bague de support (46) étant disposée dans la région du bord (58) de la portion tubulaire (52) opposé à la portion de support (48) et la portion de support (48) étant réalisée de préférence d'une seule pièce avec la portion tubulaire (52).

7. Agencement de support de disques (44) selon l'une quelconque des revendications précédentes, **caractérisé en ce que** la portion tubulaire (52) présente une portion de support de disques (56) pour recevoir des disques, laquelle est entourée par la bague de support (46), la portion de support de disques (56) étant réalisée de préférence dans une région de la portion tubulaire (52) opposée à la portion de support (48), éventuellement étant adjacente au bord (58) de la portion tubulaire (52) opposé à la portion de support (48), et/ou la portion de support de disques (56) présentant de préférence un profil de denture (62) pour recevoir de manière solidaire en rotation des disques (32), la portion de support de disques (56) présentant des nervures axiales (64) saillant radialement vers l'extérieur et des nervures axiales (66) saillant radialement vers l'intérieur, réparties particulièrement préférablement dans la direction périphérique (10, 12), éventuellement disposées de manière alternée, pour réaliser le profil de denture (62), et les butées (74, 76) ou les renfoncements (78) étant prévus pour la fixation de la bague de support (46) de préférence sur les nervures axiales (64) saillant radialement vers l'extérieur.

8. Agencement de support de disques (44) selon l'une quelconque des revendications précédentes, **caractérisé en ce que** la portion tubulaire (52), de préférence la portion de support de disques (56), présente des évidements (72) pour l'huile centrifuge.

9. Agencement de support de disques (44) selon l'une quelconque des revendications précédentes, **caractérisé en ce que** le diamètre intérieur de la bague de support (46) peut être modifié et fixé, la bague de support (46) comprenant de préférence une bande ou un câble (94) et un mécanisme de serrage (96) et la bande ou le câble (94) constituant un oeillet, dont le diamètre peut être rétréci, et en particulier de préférence aussi agrandi, à l'aide du mécanisme de serrage (96).

10. Agencement de support de disques (44) selon l'une quelconque des revendications précédentes, **caractérisé en ce que** la bague de support (46) est réalisée de manière séparée du support de disques (36), et est fixée sur le support de disques (36) et/ou présente une plus grande résistance que la portion tubulaire (52) du support de disques (36).

11. Agencement de support de disques (44) selon l'une quelconque des revendications précédentes, **caractérisé en ce que** le support de disques (36) est un support de disques extérieurs ou un support de disques intérieurs, la bague de support sur le support de disques intérieurs n'étant de préférence pas réalisée sous forme de partenaire de friction transmettant le couple, et plus préférablement n'étant pas du tout réalisée sous forme de partenaire de friction.

12. Embrayage à disques (2) comprenant un agencement de support de disques (44) selon l'une quelconque des revendications précédentes, dans lequel de préférence aucun disque d'entraînement pour le support de disques (36) n'est prévu, ou un disque d'entraînement est prévu, lequel est en liaison d'entraînement en rotation avec le support de disques (36), la bague de support (46) étant réalisée de manière séparée du disque d'entraînement.

13. Procédé de fabrication d'un agencement de support de disques (44) selon l'une quelconque des revendications 1 à 11, ou d'un embrayage à disques (2) selon la revendication 12, comprenant les étapes de procédé consistant à :
fournir un support de disques (36) avec une portion tubulaire (52), sur laquelle sont prévues des butées (74, 76) saillant radialement vers l'extérieur réalisées d'une seule pièce avec la portion tubulaire (52), et/ou des renfoncements (78) en retrait radialement vers l'intérieur pour la fixation d'une bague de support (46) dans la direction axiale, et une bague de support fermée séparée (46), et
fixer la bague de support (46) sur le support de disques (36) de telle sorte que celui-ci entoure la portion tubulaire (52) du support de disques (36), la bague de support (46) étant fixée à l'aide des butées (74, 76) saillant radialement vers l'extérieur et/ou des renfoncements (78) en retrait radialement vers l'intérieur, par engagement par coopération de forme et/ou par force sur le support de disques (36).

14. Procédé selon la revendication 13, **caractérisé en ce que** l'étape de procédé consistant à fixer la bague de support (46) comprend les étapes de procédé consistant à :
comprimer élastiquement la portion tubulaire (52) dans la direction radiale,
pousser la bague de support (46) sur la portion tubulaire comprimée (52), et
élargir automatiquement la portion tubulaire (52).

15. Procédé selon la revendication 13, **caractérisé en ce que** l'étape de procédé consistant à fixer la bague de support (46) comprend l'étape de procédé consistant à :
pousser la bague de support (46) avec déformation élastique des butées (74, 76) dans la direction radiale.
